# EUROPEAN PATENT APPLICATION

(11) **EP 3 173 175 A1**
(43) Date of publication of application: **31.05.2017**
(21) Application number: 16200202.6
(22) Date of filing: 23.11.2016
(51) Int. Cl.: B23K 1/00, B23K 9/04, B23K 10/02, B23K 26/34, B23K 35/02, B23P 6/00, F01D 5/00, B23K 101/00, B23K 103/02

(54) **AN ARTICLE TREATMENT METHOD AND TREATED ARTICLE**

(30) Priority: 24.11.2015 US 201514950965
(71) Applicant: General Electric Company, Schenectady, NY 12345 (US)
(72) Inventor: CUI, Yan, Greenville, SC 29615 (US); KOTTILINGAM, Srikanth Chandrudu, Greenville, SC 29615 (US); TOLLISON, Brian Lee, Greenville, SC 29615 (US); LIN, Dechao, Greenville, SC 29615 (US)
(74) Representative: Pöpper, Evamaria

(57) **Abstract**

An article (100) treatment method includes positioning an article (100) having a base material (101). A weld filler material (201) is applied to the base material (101) by welding to form a treated article (100). The weld filler material (201) includes at least one temperature depressant element at a concentration sufficient to form potential eutectic-containing zones (205) in the welded article (100). The potential eutectic-containing zones (205) contain the at least one temperature depressant element. The welded article (100) is heated to a temperature sufficiently high and for a time sufficiently long to form at least partially liquefied eutectic-containing zones (205). The at least partially liquefied eutectic zones (205) are capable of flow into cracks (207) formed during the welding.

## Description

### FIELD OF THE INVENTION

The present application is directed to methods for treating articles. More particularly, the present application is directed to methods for treating welded articles formed of hard-to-weld alloys.

### BACKGROUND OF THE INVENTION

High strength and oxidation resistant materials are often used in components for gas turbines. For example, nickel-based and cobalt-based superalloys are often used for buckets, blades, nozzles, or other components within gas turbines. Such superalloys can have poor weldability. Thus, features in such components are often formed by other processes.

Hard-to-weld (HTW) alloys, such as nickel-based superalloys and certain aluminum-titanium alloys, due to their gamma prime and various geometric constraints, are susceptible to gamma prime strain aging, liquation and hot cracking. These materials are also difficult to join when the gamma prime phase is present in volume fractions greater than about 30%, which may occur when aluminum or titanium content exceeds about 3%.

These HTW materials may be incorporated into gas turbine engines, forming components of the gas turbine engines, such as blades (buckets), nozzles (vanes), shrouds, combustors and other hot gas path components. Cracks may undesirably form in the HTW material during welding operations, such as welding operations that are performed to service the components. Such cracks are undesirable in repaired components.

Alternate known methods for joining components of gas turbines having nickel-based and cobalt-based superalloys by other joining processes include brazing. However, brazing can suffer from drawbacks. Brazing uses a filler material that can introduce different considerations. For example, certain filler materials can cause lack of joint strength. In addition, brazing can require a higher level of sophistication from the operator. Brazing also requires placing an entire component into a vacuum furnace and heating of the entire part during the braze cycle, thereby limiting applicability to size constrained and/or temperature-sensitive applications.

### BRIEF DESCRIPTION OF THE INVENTION

In an exemplary embodiment, an article treatment method includes positioning an article having a base material. A weld filler material is applied to the base material by welding to form a treated article. The weld filler material includes at least one temperature depressant element at a concentration sufficient to form potential eutectic-containing microstructures in the welded article. The potential eutectic-containing microstructures zones contain the at least one temperature depressant element. The welded article is heated to a temperature sufficiently high and for a time sufficiently long to form an at least partially liquefied eutectic-containing zones. The at least partially liquefied eutectic-containing zones are capable of flow into cracks formed during the welding.

In an exemplary embodiment, an article treatment method includes removing an article having a base material from service. A portion of the base material is excavated and a weld filler material is applied to the portion of the base material that has been excavated by welding to form a welded article. The weld filler material includes at least one temperature depressant element at a concentration sufficient to form potential eutectic-containing microstructures in the welded article. These microstructures contain the at least one temperature depressant element. The welded article is heated to a temperature sufficiently high and for a time sufficiently long to form at least partially liquefied eutectic-containing zones. The at least partially liquefied eutectic-containing zones are capable of flow into cracks formed during the welding.

In another exemplary embodiment, an article including a weld filler material welded to a base material. The article having a heat affected zone between the weld filler material and the base material. The heat affected zone includes at least one crack having a eutectic-containing zone therein.

Other features and advantages of the present invention will be apparent from the following more detailed description of the preferred embodiment, taken in conjunction with the accompanying drawings, which illustrate, by way of example, the principles of the invention.

### BRIEF DESCRIPTION OF THE DRAWINGS

FIG. 1 is a schematic view of an article prior to welding, according to an embodiment of the present disclosure.
FIG. 2 is a schematic view of a welded article, according to an embodiment of the present disclosure.
FIG. 3 is a schematic view of a heat treated article, according to an embodiment of the present disclosure.
FIG. 4 shows a process, according to the present disclosure.

Wherever possible, the same reference numbers will be used throughout the drawings to represent the same parts.

### DETAILED DESCRIPTION OF THE INVENTION

Provided are exemplary methods for treating articles and turbine components. Embodiments of the present disclosure, in comparison to methods not utilizing one or more features disclosed herein, effectively heals or reduces the number of cracks in the weld metal and base metal heat affected zone subsequent to a weld process. In addition, embodiments of the present disclosure greatly decrease the crack numbers and length in the heat affected zone (HAZ) adjacent to the fusion line. Further, embodiments of the present disclosure permit welding of hard-to-weld components, including hard-to-weld alloys, such as Rene 108 and GTD111, wherein the resultant weld includes zero or near zero surface cracks and reduced crack sizes or crack elimination in the heat affected zone. Further, embodiments of the present disclosure require reduced heat input to the welding process due to temperature depressant element present in the filler metal, therefore, reducing or eliminating cracking and distortion resulting from the weld.

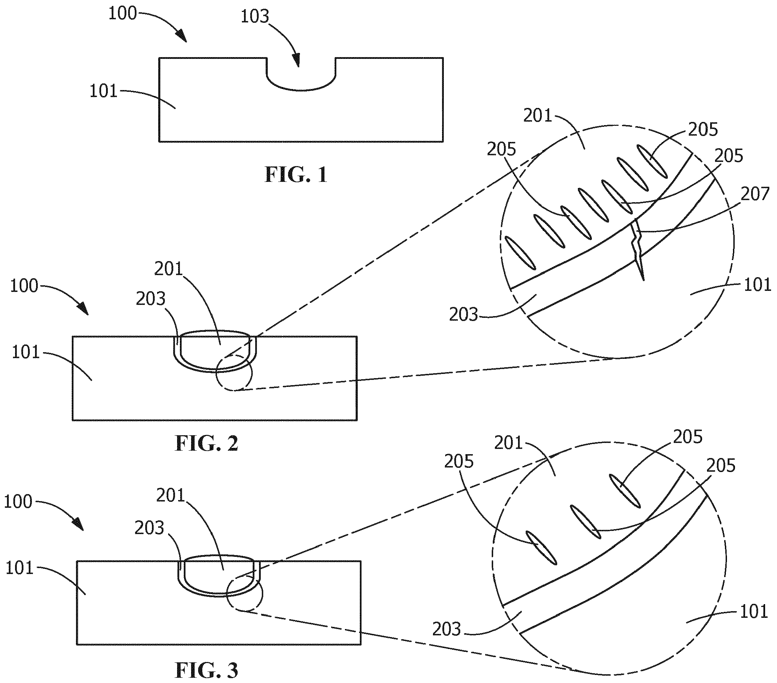

FIG. 1 shows an article 100 formed of a base material 101 prior to welding. The treatment area 103, for example, includes a damaged portion of the article 100 that has been removed. In other embodiments, the treatment area 103 may be present on a new article of manufacture. In addition, the article includes a treatment area 103. Although the embodiment shown in FIG. 1 includes a treatment area as a U-shaped groove excavation, the present disclosure is not so limited. For example, the surface may include a crack or other surface feature (machined or non-machined), a V-shaped groove, a notch, or an unprepared or non-excavated surface.

In one embodiment, the base material 101 is a hard-to-weld (HTW) alloy. As used herein, an "HTW alloy" is an alloy which exhibits liquation, hot and strain-age cracking, and which is therefore resistant to welding. In a further embodiment, the HTW alloy is a superalloy. In yet a further embodiment, the HTW alloy is a nickel-based superalloy or aluminum-titanium superalloy. The HTW alloy may include, but is not limited to, GTD 111, GTD 444, GTD262, René N2, René N4, René N5, René N6, René 65, René 77 (Udimet 700), René 80, René 88DT, René 104, René 108, René 125, René 142, René 195, René N500, René N515, CM247, MarM247, CMSX-4, MGA1400, MGA2400, IN100, INCONEL 700, INCONEL 738, INCONEL 792, DS Siemet, CMSX10, PWA1480, PWA1483, PWA1484, TMS-75, TMS-82, Mar-M-200, UDIMET 500, ASTROLOY, and combinations thereof.

As used herein, "ASTROLOY" refers to an alloy including a composition, by weight, of about 15% chromium, about 17% cobalt, about 5.3% molybdenum, about 4% aluminum, about 3.5% titanium, and a balance of nickel.

As used herein, "DS Siemet" refers to an alloy including a composition, by weight, of about 9% cobalt, about 12.1 % chromium, about 3.6% aluminum, about 4% titanium, about 5.2% tantalum, about 3.7% tungsten, about 1.8% molybdenum, and a balance of nickel.

As used herein, "GTD111" refers to an alloy including a composition, by weight, of about 14% chromium, about 9.5% cobalt, about 3.8% tungsten, about 4.9% titanium, about 3% aluminum, about 0.1% iron, about 2.8% tantalum, about 1.6% molybdenum, about 0.1% carbon, and a balance of nickel.

As used herein, "GTD262" refers to an alloy including a composition, by weight, of about 22.5% chromium, about 19% cobalt, about 2% tungsten, about 1.35% niobium, about 2.3% titanium, about 1.7% aluminum, about 0.1% carbon, and a balance of nickel.

As used herein, "GTD444" refers to an alloy including a composition, by weight, of about 7.5% cobalt, about 0.2% iron, about 9.75% chromium, about 4.2% aluminum, about 3.5% titanium, about 4.8% tantalum, about 6% tungsten, about 1.5% molybdenum, about 0.5% niobium, about 0.2% silicon, about 0.15% hafnium, and a balance of nickel.

As used herein, "MGA1400" refers to an alloy including a composition, by weight, of about 10% cobalt, about 14% chromium, about 4% aluminum, about 2.7% titanium, about 4.7% tantalum, about 4.3% tungsten, about 1.5% molybdenum, about 0.1% carbon, and a balance of nickel.

As used herein, "MGA2400" refers to an alloy including a composition, by weight, of about 19% cobalt, about 19% chromium, about 1.9% aluminum, about 3.7% titanium, about 1.4% tantalum, about 6% tungsten, about 1% niobium, about 0.1% carbon, and a balance of nickel.

As used herein, "PMA 1480" refers to an alloy including a composition, by weight, of about 10% chromium, about 5% cobalt, about 5% aluminum, about 1.5% titanium, about 12% tantalum, about 4% tungsten, and a balance of nickel.

As used herein, "PWA1483" refers to an alloy including a composition, by weight, of about 9% cobalt, about 12.2% chromium, about 3.6% aluminum, about 4.1% titanium, about 5% tantalum, about 3.8% tungsten, about 1.9% molybdenum, and a balance of nickel.

As used herein, "PMA 1484" refers to an alloy including a composition, by weight, of about 5% chromium, about 10% cobalt, about 2% molybdenum, about 5.6% aluminum, about 9% tantalum, about 6% tungsten, and a balance of nickel.

As used herein, "René N2" refers to an alloy including a composition, by weight, of about 7.5% cobalt, about 13% chromium, about 6.6% aluminum, about 5% tantalum, about 3.8% tungsten, about 1.6% rhenium, about 0.15% hafnium, and a balance of nickel.

As used herein, "René N4" refers to an alloy including a composition, by weight, of about 9.75% chromium, about 7.5% cobalt, about 4.2% aluminum, about 3.5% titanium, about 1.5% molybdenum, about 6.0% tungsten, about 4.8% tantalum, about 0.5% niobium, about 0.15% hafnium, and a balance of nickel.

As used herein, "René N5" refers to an alloy including a composition, by weight, of about 7.5% cobalt, about 7.0% chromium, about 6.5% tantalum, about 6.2% aluminum, about 5.0% tungsten, about 3.0% rhenium, about 1.5% molybdenum, about 0.15% hafnium, and a balance of nickel.

As used herein, "René N6" refers to an alloy including a composition, by weight, of about 12.5% cobalt, about 4.2% chromium, about 7.2% tantalum, about 5.75% aluminum, about 6% tungsten, about 5.4% rhenium, about 1.4% molybdenum, about 0.15% hafnium, and a balance of nickel.

As used herein, "René 65" refers to an alloy including a composition, by weight, of about 13% cobalt, up to about 1.2% iron, about 16% chromium, about 2.1% aluminum, about 3.75% titanium, about 4% tungsten, about 4% molybdenum, about 0.7% niobium, up to about 0.15% manganese, and a balance of nickel.

As used herein, "René 77 (Udimet 700)" refers to an alloy including a composition, by weight, of about 15% chromium, about 17% cobalt, about 5.3% molybdenum, about 3.35% titanium, about 4.2% aluminum, and a balance of nickel.

As used herein, "René 80" refers to an alloy including a composition, by weight, of about 14% chromium, about 9.5% cobalt, about 4% molybdenum, about 3% aluminum, about 5% titanium, about 4% tungsten, about 0.17% carbon, and a balance of nickel.

As used herein, "René 88DT" refers to an alloy including a composition, by weight, of about 16% chromium, about 13% cobalt, about 4% molybdenum, about 0.7% niobium, about 2.1 % aluminum, about 3.7% titanium, about 4% tungsten, about 0.1% rhenium, a maximum of about 4.3% rhenium and tungsten, and a balance of nickel.

As used herein, "René 104" refers to an alloy including a composition, by weight, of about 13.1% chromium, about 18.2% cobalt, about 3.8% molybdenum, about 1.9% tungsten, about 1.4% niobium, about 3.5% aluminum, about 3.5% titanium, about 2.7% tantalum, and a balance of nickel.

As used herein, "René 108" refers to an alloy including a composition, by weight, of about 8.4% chromium, about 9.5% cobalt, about 5.5% aluminum, about 0.7% titanium, about 9.5% tungsten, about 0.5% molybdenum, about 3% tantalum, about 1.5% hafnium, and a balance of nickel.

As used herein, "René 125" refers to an alloy including a composition, by weight, of about 8.5% chromium, about 10% cobalt, about 4.8% aluminum, up to about 2.5% titanium, about 8% tungsten, up to about 2% molybdenum, about 3.8% tantalum, about 1.4% hafnium, about 0.11% carbon, and a balance of nickel.

As used herein, "René 142" refers to an alloy including a composition, by weight, of about 6.8% chromium, about 12% cobalt, about 6.1% aluminum, about 4.9% tungsten, about 1.5% molybdenum, about 2.8% rhenium, about 6.4% tantalum, about 1.5% hafnium, and a balance of nickel.

As used herein, "René 195" refers to an alloy including a composition, by weight, of about 7.6% chromium, about 3.1% cobalt, about 7.8% aluminum, about 5.5% tantalum, about 0.1% molybdenum, about 3.9% tungsten, about 1.7% rhenium, about 0.15% hafnium, and a balance of nickel.

As used herein, "René N500" refers to an alloy including a composition, by weight, of about 7.5% cobalt, about 0.2% iron, about 6% chromium, about 6.25% aluminum, about 6.5% tantalum, about 6.25% tungsten, about 1.5% molybdenum, about 0.15% hafnium, and a balance of nickel.

As used herein, "René N515" refers to an alloy including a composition, by weight, of about 7.5% cobalt, about 0.2% iron, about 6% chromium, about 6.25% aluminum, about 6.5% tantalum, about 6.25% tungsten, about 2% molybdenum, about 0.1% niobium, about 1.5% rhenium, about 0.6% hafnium, and a balance of nickel.

As used herein, "MarM247" and "CM247" refer to an alloy including a composition, by weight, of about 5.5% aluminum, about 0.15% carbon, about 8.25% chromium, about 10% cobalt, about 10% tungsten, about 0.7% molybdenum, about 0.5% iron, about 1% titanium, about 3% tantalum, about 1.5% hafnium, and a balance of nickel.

As used herein, "IN100" refers to an alloy including a composition, by weight, of about 10% chromium, about 15% cobalt, about 3% molybdenum, about 4.7% titanium, about 5.5% aluminum, about 0.18% carbon, and a balance of nickel.

As used herein, "INCONEL 700" refers to an alloy including a composition, by weight, of up to about 0.12% carbon, about 15% chromium, about 28.5% cobalt, about 3.75% molybdenum, about 2.2% titanium, about 3% aluminum, about 0.7% iron, up to about 0.3% silicon, up to about 0.1% manganese, and a balance of nickel.

As used herein, "INCONEL 738" refers to an alloy including a composition, by weight, of about 0.17% carbon, about 16% chromium, about 8.5% cobalt, about 1.75% molybdenum, about 2.6% tungsten, about 3.4% titanium, about 3.4% aluminum, about 0.1% zirconium, about 2% niobium, and a balance of nickel.

As used herein, "INCONEL 792" refers to an alloy including a composition, by weight, of about 12.4% chromium, about 9% cobalt, about 1.9% molybdenum, about 3.8% tungsten, about 3.9% tantalum, about 3.1% aluminum, about 4.5% titanium, about 0.12% carbon, about 0.1 % zirconium, and a balance of nickel.

As used herein, "UDIMET 500" refers to an alloy including a composition, by weight, of about 18.5% chromium, about 18.5% cobalt, about 4% molybdenum, about 3% titanium, about 3% aluminum, and a balance of nickel.

As used herein, "Mar-M-200" refers to an alloy including a composition, by weight, of about 9% chromium, about 10% cobalt, about 12.5% tungsten, about 1% niobium, about 5% aluminum, about 2% titanium, about 10.14% carbon, about 1.8% hafnium, and a balance of nickel.

As used herein, "TMS-75" refers to an alloy including a composition, by weight, of about 3% chromium, about 12% cobalt, about 2% molybdenum, about 6% tungsten, about 6% aluminum, about 6% tantalum, about 5% rhenium, about 0.1% hafnium, and a balance of nickel.

As used herein, "TMS-82" refers to an alloy including a composition, by weight, of about 4.9% chromium, about 7.8% cobalt, about 1.9% molybdenum, about 2.4% rhenium, about 8.7% tungsten, about 5.3% aluminum, about 0.5% titanium, about 6% tantalum, about 0.1% hafnium, and a balance of nickel.

As used herein, "CMSX-4" refers to an alloy including a composition, by weight, of about 6.4% chromium, about 9.6% cobalt, about 0.6% molybdenum, about 6.4% tungsten, about 5.6% aluminum, about 1.0% titanium, about 6.5% tantalum, about 3% rhenium, about 0.1% hafnium, and a balance of nickel.

As used herein, "CMSX-10" refers to an alloy including a composition, by weight, of about 2% chromium, about 3% cobalt, about 0.4% molybdenum, about 5% tungsten, about 5.7% aluminum, about 0.2% titanium, about 8% tantalum, about 6% rhenium, and a balance of nickel.

In one embodiment, the article 100 is a turbine component. The turbine component may be any suitable turbine component including, but not limited to, a hot gas path component, a blade (bucket), a nozzle (vane), a shroud, a combustor, a turbine wheel, a 3D-manufactured component formed of HTW alloys, or a combination thereof. The component is most typically an airfoil, including stationary airfoils, such as nozzles or vanes, and rotating airfoils including blades and buckets. The terms "blades" and "buckets" are used herein interchangeably. In the case of a blade or bucket, an example of the region under repair and subjected to welding is the tip region after the blade or bucket has been in service. This area of the blade is subject to wear due to rubbing contact with a surrounding shroud, and to oxidation in the high-temperature environment. In the case of a nozzle or vane, typically the area under repair is the leading edge which is subject to wear due to exposure of the highest velocity gases in the engine at elevated temperature. The weld filler material may be used alone during welding, as a filler material, or in combination with an insert, such as a contoured plate that is welded in place along the leading edge of a nozzle or vane.

With reference now to FIG. 2, article 100 has been welded, with weld filler material 201 filling the treatment area 103 and fusing the weld filler material 201 and the base material 101 together. The joined area includes a heat affected zone 203 between the base material 101 and the weld filler material 201. The heat affected zone 203 includes a diffusion zone and portions of the weld that are modified from exposure to the heat of welding and the inclusion of the weld filler material 201. Welding may be carried out with any suitable conventional welding technique including gas-tungsten-arc welding, plasma-arc welding, hybrid welding and the like. The weld filler material 201 includes a suitable high strength weld filler material, including filler material with high gamma prime content. The weld filler material 201 includes at least one temperature depressant element. The temperature depressant element is any suitable element, when present in the weld filler material, forms a potential eutectic-containing zone 205 in the solidified weld filler material 201 or in the heat affected zone 203 of the weld. In addition, the temperature depressant element includes a lower melting temperature or induces a lower melting temperature in the weld filler material 201 than the weld filler material not having the temperature depressant element. Suitable temperature depressant elements include, but are not limited to, boron (B) and silicon (Si) and Germanium (Ge). In one embodiment, the weld filler material includes about 0.5 to about 4.0 wt% or about 0.75 to about 1.75 wt% or about 1.0 to about 1.5 wt% temperature depressant element. The zone 205 include a eutectic-containing microstructure including the temperature depressant elements.

Also shown in FIG. 2 is a crack 207 formed from the welding of the weld filler material 201 to the base material 101. The size, geometry and orientation of crack 207 are schematically shown and significantly enlarged for illustration purposes in FIG. 2 and are merely representative of the openings, cracks or features that may result from welding of the weld filler material 201 to the base material 101. In addition, a plurality of cracks may be present in the heat affected zone 203 and may extend into the base material 101. The presence or absence and the number of cracks may be dependent upon the specific base material 101 and the specific weld filler material 201 utilized. Typically, alloys characterized as harder to weld result in a greater instance of cracking in typical known weld processes.

With reference now to FIG. 3, the welded article 100 from FIG. 2 has been heat treated. In one embodiment, the article is heat treated to a temperature and for a time sufficient to at least partially liquefy at least a portion of the eutectic-containing zones 205 and induce flow of the zones 205. The at least partially liquefying includes an incipient melting of the eutectic-containing zones 205, which permit flow of the high concentrated eutectic-containing substance into cracks 207. In one embodiment, the liquefied eutectic-containing substance flow into crack 207 and solidify. In one embodiment, a welded article is vacuum-heat-treated in a process that includes both a stress relief cycle and flow of the eutectic-containing zones. In one embodiment, the heat treating includes standard heat treating process steps and parameters for the base material 101. In a further embodiment, heat treating includes heating the base material and the welded weld filler material 201 under vacuum or inert atmosphere to a predetermined temperature. The predetermined temperature may be any suitable temperature with respect to the material being heat treated. In one embodiment, the predetermined temperature is between about 1093 °C (2000 °F) to about 1260 °C (2300 °F), alternatively between about 1177 °C (2150 °F) to about 1218 °C (2225 °F) or 1149 °C (2100 °F) to about 1177 °C (2150 °F) or about 1121 °C (2050 °F) or about 1191 °C (2175 °F). Heat treating may further include a predetermined temperature ramping program to the predetermined temperature, a hold time at the predetermined temperature, a predetermined temperature quenching program from the predetermined temperature, or a combination thereof. In one embodiment, the heat treatment is held at temperature for between about 5 to about 20 minutes or between about 10 to about 15 minutes or about 12 minutes.

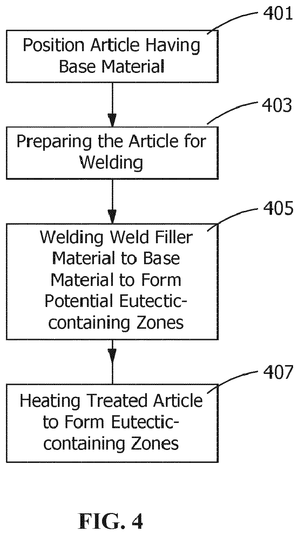

FIG. 4 shows a method, according to an embodiment of the present disclosure. The method includes positioning an article 100 having a base material 101 (step 401). In one embodiment, the article is removed from service for repair or maintenance and positioned in preparation for welding. After positioning the article 100, the article 100 is prepared for welding (step 403). The preparing may include excavating a portion of the surface of the base material 101, in other embodiments, the surface may be cleaned and/or surface debris or oxidation may be removed. As utilized herein, "excavating" is a process wherein a portion of the surface is removed by chemical or physical processes in order to clean or remove undesired surface features in preparation for welding. In one embodiment, a portion of the base material 101 is excavated and a weld filler material 201 is applied to the portion of the base material 101 that has been excavated. The application of the weld filler materials 201 is as a buttering layer, or initial layer to facilitate crack healing at or near the fusion zone. Subsequent to applying the buttering layer or initial layer of the weld filler material 201, a differing composition of weld filler materials, such as a conventional or known weld filler material, may be applied to the buttering or initial layer. After the article 100 is prepared for welding, the article 100 is welded such that a weld filler material 201 is welded to the base material 101 (step 405). During the welding the temperature depressant materials in the weld filler material 201 form a plurality of potential eutectic-containing zones 205. In addition, the welding results in cracks that form in at least the heat affected zone 203. The potential eutectic-containing zones include the temperature depressant materials and are capable of melting at a lower temperature than the bulk of the base material 101 and the bulk of remaining portion of the weld filler material 201. After welding, the article is subjected to a heat treatment (step 407). During the heat treatment, the article, which includes the potential eutectic-containing zones, are heated to a temperature to at least partially liquefy the eutectic-containing zones. The liquefied zones are capable of flow into the cracks formed from welding and heal the cracks, resulting in a reduced or eliminated number of cracks in the heat treated article. In one embodiment, the weld filler material 201, including the temperature depressant element, is applied to the surface of the weld such that the weld filler material 201 is capable of flow during heat treatment and flows into and heals surface cracks, if they are present. The weld is permitted to crack initially during or just after welding, but any such crack is "healed" or repaired during the braze cycle of the post-weld in-situ braze healing via heat treatment. The end result is a fused region of the nickel superalloy components that is free of or substantially free of cracks, permitting the welding of hard-to-weld alloys.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following clauses:
1. An article treatment method comprising:
   positioning an article having a base material; and
   applying a weld filler material to the base material by welding to form a welded article, the weld filler material including at least one temperature depressant element at a concentration sufficient to form potential eutectic-containing zones in the welded article, the potential eutectic-containing zones containing the at least one temperature depressant element; and
   heating the welded article to a temperature sufficiently high and for a time sufficiently long to form at least partially liquefied eutectic-containing zones;
   wherein the at least partially liquefied eutectic-containing zones are capable of flow into cracks formed during the welding.
2. The method of clause 1, wherein the base material is a hard-to-weld (HTW) alloy.
3. The method of clause 1, wherein the temperature depressant element is boron or silicon or germanium.
4. The method of clause 1, further comprising excavating a portion of the base material, and the applying being applying the weld filler material to the portion of the base material that is excavated.
5. The method of clause 4, wherein the filler material is applied as an initial layer to the portion of the base material that is excavated.
6. The method of clause 1, wherein the concentration of the at least one temperature depressant element is from about 0.5 to about 4.0 wt%.
7. The method of clause 1, wherein the heat treatment is performed at a temperature between about 1093 °C (2000 °F) to about 1260 °C (2300 °F).
8. The method of clause 1, wherein the heat treatment is performed at a temperature between about 1177 °C (2150 °F) to about 1218 °C (2225 °F).
9. The method of clause 1, wherein the article is a turbine component.
10. The method of clause 1, wherein the turbine component is selected from the group consisting of a blade, a nozzle, a shroud, a combustor, and a turbine wheel.
11. An article treatment method comprising:
   removing an article from service, the article having a base material;
   excavating a portion of the base material; and
   applying a weld filler material to the portion of the base material that has been excavated by welding to form a welded article, the weld filler material including at least one temperature depressant element at a concentration sufficient to form potential eutectic-containing zones in the welded article, the eutectic-containing zones containing the at least one temperature depressant element; and
   heating the welded article to a temperature sufficiently high and for a time sufficiently long to form at least partially liquefied eutectic-containing zones;
   wherein the at least partially liquefied eutectic-containing zones are capable of flow into cracks formed during the welding.
12. The method of clause 11, wherein the base material a hard-to-weld (HTW) alloy.
13. The method of clause 11, wherein the temperature depressant element is boron or silicon germanium.
14. The method of clause 11, wherein the applying includes applying a filler material as an initial layer to the portion of the base material that is excavated.
15. The method of clause 11 wherein the concentration of the at least one temperature depressant element is from about 0.5 to about 4.0 wt%.
16. The method of clause 11, wherein the heat treatment is performed at a temperature between about 1093 °C (2000 °F) to about 1260 °C (2300 °F).
17. The method of clause 11, wherein the heat treatment is performed at a temperature between about 1177 °C (2150 °F) to about 1218 °C (2225 °F).
18. The method of clause 11, wherein the article is a turbine component.
19. The method of clause 11, wherein the turbine component is selected from the group consisting of a blade, a nozzle, a shroud, a combustor, and a turbine wheel.
20. A treated article, the article comprising:
   a weld filler material welded to a base material;
   a heat affected zone between the weld filler material and the base material, the heat affected zone including at least one crack having a solidified eutectic-containing zone therein.

## Claims

1. An article treatment method comprising:
positioning an article (100) having a base material (101); and
applying a weld filler material (201) to the base material (101) by welding to form a welded article (100), the weld filler material (201) including at least one temperature depressant element at a concentration sufficient to form potential eutectic-containing zones (205) in the welded article (100), the potential eutectic-containing zones (205) containing the at least one temperature depressant element; and
heating the welded article (100) to a temperature sufficiently high and for a time sufficiently long to form at least partially liquefied eutectic-containing zones (205);
wherein the at least partially liquefied eutectic-containing zones (205) are capable of flow into cracks (207) formed during the welding.

2. The method of claim 1, wherein the base material (101) is a hard-to-weld (HTW) alloy.

3. The method of claim 1 or claim 2, wherein the temperature depressant element is boron or silicon or germanium.

4. The method of any of claims 1 to 3, further comprising excavating a portion of the base material (101), and the applying being applying the weld filler material (201) to the portion of the base material (101) that is excavated.

5. The method of claim 4, wherein the filler material is applied as an initial layer to the portion of the base material (101) that is excavated.

6. The method of claim 1, wherein the concentration of the at least one temperature depressant element is from about 0.5 to about 4.0 wt%.

7. The method of claim 1, wherein the heat treatment is performed at a temperature between about 1093 °C (2000 °F) to about 1260 °C (2300 °F).

8. The method of claim 7, wherein the heat treatment is performed at a temperature between about 1177 °C (2150 °F) to about 1218 °C (2225 °F).

9. The method of any of claims 1 to 8, wherein the article (100) is a turbine component.

10. The method of claim 9, wherein the turbine component is selected from the group consisting of a blade, a nozzle, a shroud, a combustor, and a turbine wheel.

11. An article treatment method comprising:
removing an article (100) from service, the article (100) having a base material (101);
excavating a portion of the base material (101); and
applying a weld filler material (201) to the portion of the base material (101) that has been excavated by welding to form a welded article (100), the weld filler material (201) including at least one temperature depressant element at a concentration sufficient to form potential eutectic-containing zones (205) in the welded article (100), the eutectic-containing zones (205) containing the at least one temperature depressant element; and
heating the welded article (100) to a temperature sufficiently high and for a time sufficiently long to form at least partially liquefied eutectic-containing zones (205);
wherein the at least partially liquefied eutectic-containing zones (205) are capable of flow into cracks (207) formed during the welding.

12. The method of claim 11, wherein the base material (101) a hard-to-weld (HTW) alloy.

13. The method of claim 11 or claim 12, wherein the temperature depressant element is boron or silicon germanium.

14. The method of any of claims 11 to 13, wherein the applying includes applying a filler material (201) as an initial layer to the portion of the base material (101) that is excavated.

15. A treated article (100), the article comprising:
a weld filler material (201) welded to a base material(101);
a heat affected zone between the weld filler material (201) and the base material (101), the heat affected zone including at least one crack (207) having a solidified eutectic-containing zone (205) therein.
